(19) Europäisches Patentamt
European Patent Office
Office européen des brevets

(11) EP 4 213 128 A1

(12) EUROPEAN PATENT APPLICATION
published in accordance with Art. 153(4) EPC

(43) Date of publication:
19.07.2023 Bulletin 2023/29

(51) International Patent Classification (IPC):
G08G 1/16 (2006.01)          G06T 7/00 (2017.01)

(21) Application number: 21866382.1

(52) Cooperative Patent Classification (CPC):
G06T 7/00; G08G 1/16

(22) Date of filing: 21.07.2021

(86) International application number:
PCT/JP2021/027275

(87) International publication number:
WO 2022/054422 (17.03.2022 Gazette 2022/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.09.2020 JP 2020151723

(71) Applicant: Hitachi, Ltd.
Tokyo 100-8280 (JP)

(72) Inventors:
• CHOW Man Yiu
Tokyo 100-8280 (JP)

• KITANI, Mitsuhiro
Tokyo 100-8280 (JP)
• KOIKE, Jun
Tokyo 100-8280 (JP)
• OOMI, Taishi
Tokyo 100-8280 (JP)
• ODA, Atsushi
Tokyo 100-8280 (JP)

(74) Representative: Mewburn Ellis LLP
Aurora Building
Counterslip
Bristol BS1 6BX (GB)

(54) OBSTACLE DETECTION DEVICE, OBSTACLE DETECTION SYSTEM, AND OBSTACLE DETECTION METHOD

(57) The present disclosure relates to providing an obstacle detection means that is applicable to a moving body such as a train and is based on highly accurate depth information with respect to both a short-distance object and a long-distance object. An obstacle detection device according to an embodiment of the present disclosure includes a first depth representation generation unit that generates first depth representation representing a distance between the moving body and an object that is present near the moving body by using a parallax image generated from a first image and a second image, a second depth representation generation unit that generates second depth representation representing a distance between the moving body and an object that is present near the moving body by processing the first image by a predetermined machine learning method, a third depth representation generation unit that generates combined depth representation representing a distance between the moving body and the object that is present near the moving body more accurately than the first depth representation and the second depth representation by combining the first depth representation and the second depth representation, and an obstacle detection unit that generates obstacle information relating to the obstacle near the moving body by using the combined depth representation and outputs the obstacle information.

FIG. 3

**Description**

Technical Field

The present invention relates to an obstacle detection device, an obstacle detection system, and an obstacle detection method.

Background Art

In the related art, a technology using a sensor is known as a technology for improving running safety of trains. For example, there is a means for mounting an object detection sensor such as a millimeter-wave radar or a laser radar on a train as an object recognition device and detecting an obstacle that may block running of a train, such as a fallen tree, an animal, a car, and a pedestrian. Such an object recognition device performs various controls for improving the running safety of trains based on an object detection result thereof.

In detecting an obstacle that may block the running of a train, accurate determination (also referred to as "depth determination") of a distance of an object from a train is important. In the related art, a technique of calculating a parallax between two stereo images acquired by a stereo camera and determining a depth of an object on the images based on the corresponding parallax is known. However, with respect to a background object that is obscured by foreground objects or an object that appears on only one image, a parallax thereof cannot be calculated, and thus a depth thereof cannot be accurately determined.

Several suggestions are made to solve such problems and perform more accurate depth determination.

For example, JP2017-528731A (PTL 1) discloses a technique in which "the present disclosure is to cause stereo depth detection (or other depth detection based on a camera) to be more robust by using a known projection pattern. A dot is sensed in a captured image and compared with a known projection pattern in different depth, so that a match confidence score in each depth is determined. The confidence score can be used as a basis for determining the depth at each dot position, which can be a dot position in a sub pixel resolution. The confidence score can be used as a basis of a weight for interpolating pixel depths in order to find depth values with respect to pixels between pixels corresponding to the dot positions."

In addition, US9443154B (PTL 2) discloses a technique in which "a computerized system that can be mounted on a vehicle that is operable so that an object is sensed by processing a first image frame from a first camera and a second image frame from a second camera. A first area is determined as the sensed object by using the first image frame. The image position is projected to an image position in the second image frame of the sensed object in the first image frame. A second area is determined with respect to the sensed object based on both the first and second image frames. The sensed object is tracked by both the first and second image frames. When the sensed object escapes the field of view of the first camera, a third area is determined according to the second area and the second image frame.

Citation List

Patent Literature

PTL 1: JP2017-528731A
PTL 2: US9443154B

Summary of Invention

Technical Problem

PTL 1 relates to a means for projecting a known projection pattern to a predetermined object and acquiring multi-view stereo images obtained by using two or more cameras to estimate a depth based on a parallax of a projection pattern that appears on the image.

In addition, PTL 2 relates to providing a more accurate object detection means by combining a visible light image acquired by a visible light camera and an infrared light image acquired by an infrared light camera.

However, both PTL 1 and PTL 2 depend on depth determination methods based on parallaxes between stereo images, and thus can perform accurate depth determination for short-distance objects, but provides insufficient accuracy of the depth information for long-distance objects.

Further, with respect to the means disclosed in PTL 1, a static photographing environment in which a subject does not move is assumed, and thus when the means is applied to a moving body such as a train or an automobile, due to relative movement between the moving body and the object, a known projection pattern projected to the object is distorted. Therefore, accurate depth determination becomes difficult.

Accordingly, there is required an obstacle detection means that can be applied to the moving body such as a train and that is based on highly accurate depth information on both the short-distance objects and the long-distance objects.

Here, an object of the present disclosure is to provide an obstacle detection means that can be applied to a moving body such as a train and that can sense an object with high accuracy on both a short-distance object and a long-distance object by combining two types of depth representation (for example, depth representation based on stereo images and depth representation based on a machine learning method).

Solution to Problem

In order to solve the above problem, one of the representative obstacle detection device according to the present invention is an obstacle detection device that detects an obstacle near a moving body, in which the obstacle detection device includes: a first depth representation generation unit that generates first depth representation representing a distance between the moving body and an object that is present near the moving body by using a parallax image generated from a first image acquired by a first sensor and a second image acquired by a second sensor, a second depth representation generation unit that generates second depth representation representing a distance between the moving body and an object that is present near the moving body by processing the first image by a predetermined machine learning method, a third depth representation generation unit that generates combined depth representation representing a distance between the moving body and the object that is present near the moving body more accurately than the first depth representation and the second depth representation by combining the first depth representation and the second depth representation, and an obstacle detection unit that generates obstacle information relating to the obstacle near the moving body by using the combined depth representation and outputs the obstacle information.

Advantageous Effects of Invention

According to the present invention, it is possible to provide an obstacle detection means that can be applied to a moving body such as a train and that can sense an object with high accuracy on both a short-distance object and a long-distance object by combining two types of depth representation (for example, depth representation based on stereo images and depth representation based on a machine learning method).

Problems, configurations, and effects other than the above are clarified by the description as below in Description of Embodiments.

Brief Description of Drawings

[Fig. 1] Fig. 1 is a diagram illustrating a computer system for carrying out examples of the present disclosure.

[Fig. 2] Fig. 2 is a diagram illustrating a hardware configuration of an obstacle detection device according to Example 1 of the present disclosure.

[Fig. 3] Fig. 3 is a flowchart illustrating an example of a flow of an obstacle detection method according to Example 1 of the present disclosure.

[Fig. 4] Fig. 4 is a flowchart illustrating an example of a process of generating combined depth representation according to Example 1 of the present disclosure.

[Fig. 5] Fig. 5 is a diagram illustrating a specific example of a process using a point cloud according to Example 1 of the present disclosure.

[Fig. 6] Fig. 6 is a diagram illustrating a specific example of a process of correcting depth representation according to Example 1 of the present disclosure.

[Fig. 7] Fig. 7 is a diagram illustrating a specific example of a bounding box in a combined depth representation generation process according to Example 1 of the present disclosure.

[Fig. 8] Fig. 8 is a diagram illustrating a hardware configuration of an obstacle detection device according to Example 2 of the present disclosure.

[Fig. 9] Fig. 9 is a flowchart illustrating an example of a flow of an obstacle detection method according to Example 2 of the present disclosure.

[Fig. 10] Fig. 10 is a diagram illustrating an example of a process of correcting first depth representation according to Example 2 of the present disclosure.

[Fig. 11] Fig. 11 is a flowchart illustrating an example of a process of generating combined depth representation according to Example 3 of the present disclosure.

[Fig. 12] Fig. 12 is a flowchart illustrating an example of a process of generating combined depth representation according to Example 4 of the present disclosure.

[Fig. 13] Fig. 13 is a diagram illustrating a hardware configuration of an obstacle detection device according to Example 5 of the present disclosure.

[Fig. 14] Fig. 14 is a flowchart illustrating an example of a flow of an obstacle detection method according to Example 5 of the present disclosure.

[Fig. 15] Fig. 15 is a flowchart illustrating an example of a process of generating combined depth representation according to Example 5 of the present disclosure.

Description of Embodiments

Examples in the related art and embodiments of the present invention are described below with reference to the drawings. In addition, the present invention is not limited to these embodiments. Also, in the description of the drawings, the same parts are denoted by the same reference numerals.

As described above, it is important to accurately determine a distance of an object from a train (so-called "depth determination") when detecting obstacles that may block running of the train. In the related art, there is known a technique of calculating parallax between two stereo images acquired by a stereo camera and determining a depth of an object on the images based on the corresponding parallax.

In depth determination based on parallax between stereo images, the depth of the object is obtained by Equation 1 below.

[Equation 1]

$$\text{Object Depth} = (\text{Focal Length of Camera} * \text{Distance between Cameras}) / \text{Parallax}$$

In Equation 1, when the distance between cameras is short, the accuracy of depth determination decreases. Meanwhile, when the distance between cameras is long, pixel association between two stereo images becomes difficult. Due to this restriction, a detection area of the depth determination based on the parallax of the stereo images is limited, accurate depth determination with respect to a short-distance object can be performed, but the accuracy of the depth determination with respect to a long-distance object is insufficient.

Here, as described above, the present disclosure can provide an obstacle detection means that can be applied to a moving body such as a train and that can sense an object with high accuracy on both a short-distance object and a long-distance object by combining two types of depth representation (for example, depth representation based on stereo images and depth representation based on a machine learning method). Here, the "depth representation" is information that represents a distance ("depth") between the moving body and an object that is present near the corresponding moving body, and, for example, may be a so-called depth map or a so-called point cloud.

More specifically, the depth representation based on the machine learning here is, for example, a depth map based on features extracted from a single image, has a wider detection area than the depth representation based on stereo images, and represents accurate depth information on the long-distance object. Here, the depth map is an image or an image channel that includes information relating to a distance from a predetermined point of view to a predetermined object.

In addition, the depth representation based on stereo images is a depth map based on parallax between two stereo images and represents accurate depth information on a short-distance object.

In this manner, an object can be sensed with respect to the entire area of the captured image with high accuracy by combining depth representation based on the machine learning (hereinafter, referred to as "second depth representation" and "third depth representation") that represents accurate depth information relating to a long-distance object and depth representation based on stereo images(hereinafter, "first depth representation") that represents accurate depth information relating to a short-distance object. Accordingly, an obstacle that is present near a moving body such as a train can be accurately sensed, and thus safety of running can be improved.

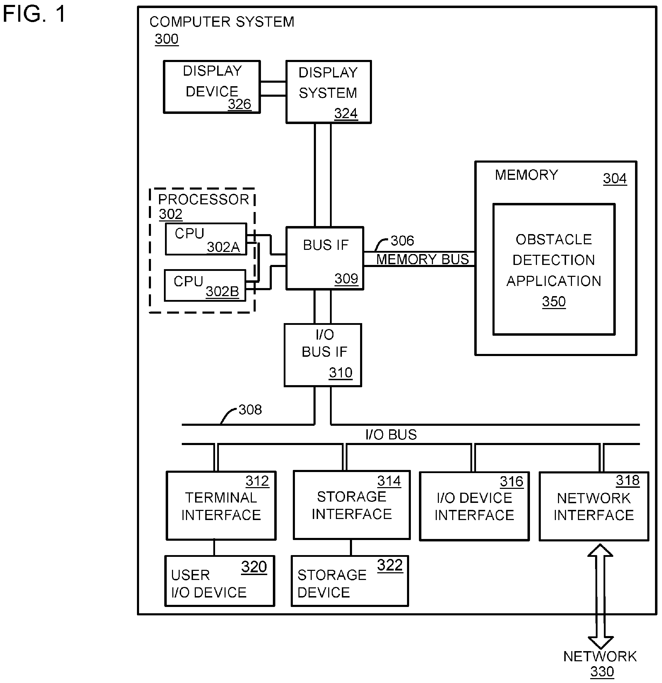

First, with reference to Fig. 1, a computer system 300 for carrying out embodiments of the present disclosure is described. Mechanisms and devices of various embodiments described in the present specification may be applied to any appropriate computing system. Main components of the computer system 300 include one or more processors 302, a memory 304, a terminal interface 312, a storage interface 314, an input/output (I/O) device interface 316, and a network interface 318. These components may be connected to each other via a memory bus 306, an I/O bus 308, a bus interface unit 309, and an I/O bus interface unit 310.

The computer system 300 may include one or a plurality of general-purpose programmable central processing units (CPU) 302A and 302B collectively referred to as the processors 302. According to a certain embodiment, the computer system 300 may include a plurality of processors, and according to another embodiment, the computer system 300 may be a single CPU system. Each of the processors 302 executes commands stored in memory 304 and may include an on-board cache.

According to a certain embodiment, the memory 304 may include a random-access semiconductor memory, a storage device, or a storage medium (either volatile or nonvolatile) for storing data and programs. The memory 304 may store all or a part of programs, modules, and data structures for executing functions described in the present specification. For example, the memory 304 may store an obstacle detection application 350. According to a certain embodiment, the obstacle detection application 350 may include commands or descriptions for executing the following functions in the processor 302.

According to a certain embodiment, instead of a processor-based system or in addition to a processor-based system, the obstacle detection application 350 may be executed in hardware via a semiconductor device, a chip, a logic gate, a circuit, a circuit card, and/or other physical hardware devices. According to a certain embodiment, the obstacle detection application 350 may include data other than the commands or descriptions. According to a certain embodiment, a camera, a sensor, or other data input devices (not illustrated) may be provided so as to directly communicate with the bus interface unit 309, the processor 302, or other hardware of the computer system 300.

The computer system 300 may include the bus interface unit 309 that performs communication between the processor 302, the memory 304, a display system 324, and the I/O bus interface unit 310. The I/O bus interface unit 310 may be connected to the I/O bus 308 for transmitting data between various I/O units. The I/O bus interface unit 310 may communicate with a plurality of I/O interface units 312, 314, 316, and 318 also known as I/O processors (IOP) or I/O adapters (IOA), via the I/O bus 308.

The display system 324 may include a display controller, a display memory, or the both. The display controller can provide video data, audio data, or audio and video data to a display device 326. In addition, the computer system 300 may include devices such as one or a plurality of sensors that collect data and are configured to provide the corresponding data to the processor 302.

For example, the computer system 300 may include a biometric sensor that collects heart rate data, stress level data, or the like, an environmental sensor that collects humidity data, temperature data, pressure data, or the like, and a motion sensor that collects acceleration data, motion data, or the like, and the like. Other types of sensors can also be used. The display system 324 may be connected to the display device 326 such as a single display screen, a television, a tablet, or a portable device.

The I/O interface unit has a function of communicating with various storage or I/O devices. A user I/O device 320 including, for example, a user output device such as a video display device and a speaker television, or user input devices such as a keyboard, a mouse, a keypad, a touch pad, a trackball, a button, a light pen, or other pointing devices can be installed onto a terminal interface unit 312. The user may input input data or an instruction to the user I/O device 320 and the computer system 300 and receive output data from the computer system 300 by using a user interface and operating a user input device. The user interface may be, for example, displayed on the display device via the user I/O device 320, reproduced by a speaker, or printed via a printer.

One or a plurality of disk drives or a direct access storage device 322 (generally, a magnetic disk drive storage device, but may also be an array of disk drives configured to appear as a single disk drive or other storage devices) can be installed onto the storage interface 314. According to a certain embodiment, the storage device 322 may be implemented as any secondary storage device. The contents of the memory 304 may be stored in the storage device 322 and read from the storage device 322, if necessary. The I/O device interface 316 may provide an interface to other I/O devices such as a printer or a fax machine. The network interface 318 may provide a communication path so that the computer system 300 and other devices can communicate with each other. The communication path may be, for example, a network 330.

According to a certain embodiment, the computer system 300 may be a device that receives requests from other computer systems (clients) that do not have direct user interfaces such as a multi-user mainframe computer system, a single-user system, or a server computer. According to other embodiments, the computer system 300 may be a desktop computer, a portable computer, a laptop, a tablet computer, a pocket computer, a phone, a smart phone, or any other appropriate electronic devices.

[Example 1]

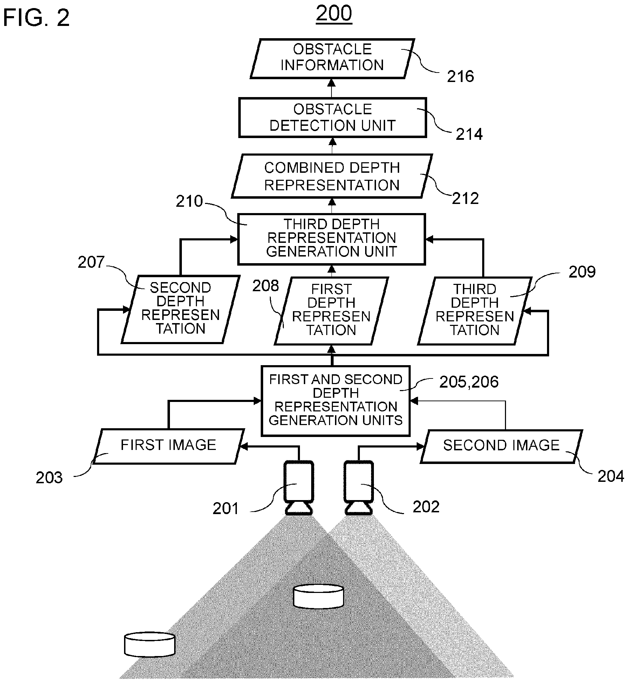

Next, with reference to Fig. 2, a hardware configuration of an obstacle detection device according to Example 1 of the present disclosure is described.

Fig. 2 is a diagram illustrating a hardware configuration of an obstacle detection device 200 according to Example 1 of the present disclosure. The obstacle detection device 200 illustrated in Fig. 2 is a device for performing high accuracy object detection and depth determination on both a short-distance object and a long-distance object by combining two types of depth representation of depth representation based on stereo images and depth representation based on the machine learning.

In addition, according to the present example, the description is made on the assumption that the first depth representation, the second depth representation, and the third depth representation are used as depth maps. However, the present disclosure is not limited to this, a different data structure may be used, as long as the depth representation indicates a distance from a moving body to an object that is present near the corresponding moving body.

As illustrated in Fig. 2, the obstacle detection device 200 according to Example 1 of the present disclosure mainly includes a first sensor 201, a second sensor 202, a first depth representation generation unit 205, a second depth representation generation unit 206, and a third depth representation generation unit 210. The first sensor 201, the second sensor 202, the first depth representation generation unit 205, the second depth representation generation unit 206, and the third depth representation generation unit 210 included in the obstacle detection device 200 illustrated in Fig. 2 may be integrally configured and arranged in a moving body such as a train and may be configured in a dispersed manner. For example, according to a certain embodiment, only the first sensor 201 and the second sensor 202 are arranged in a moving body such as a train, and functions of the first depth representation generation unit 205, the second depth representation generation unit 206, and the third depth representation generation unit 210 may be performed on a remote server device or the like connected to the moving body via a communication network such as the Internet.

In addition, the moving body (not illustrated) such as a train herein may be any moving body such as a vehicle organized as a unit of railway operation, an automobile, a monorail, an airplane, and a ship.

The first sensor 201 and the second sensor 202 are capturing devices that continuously capture images of the surroundings of the moving body such as the train to acquire the images. The first sensor 201 and the second sensor 202 are arranged with a predetermined distance therebetween and are configured to capture images of substantially the same capturing area. The types of the first sensor 201 and the second sensor 202 may be, for example, a visible light camera, a stereo camera, and an infrared light camera for acquiring visible light images.

As illustrated in Fig. 2, the first sensor 201 and the second sensor 202 acquire a first image 203 and a second image 204, respectively. The first image 203 and the second image 204 may be images of any format, such as RGB images, infrared light images, and stereo images according to the types of the sensors. However, the present example is described on the assumption that each of the first image 203 and the second image 204 is a single stereo image.

As described below, the first image 203 and the second image 204 are used for generating the depth representation based on machine learning and the depth representation based on parallax between the stereo images.

The first depth representation generation unit 205 is a functional unit for generating a first depth representation 208 by using a parallax image generated from the first image 203 acquired by the first sensor 201 and the second image 204 acquired by the second sensor 202. Here, the parallax image may be generated by the existing means.

In addition, the first depth representation 208 herein is depth representation generated from the parallax between the first image 203 and the second image 204, and thus the accuracy of depth information relating to a long-distance object is limited, but the accuracy of depth information relating to a short-distance object is satisfactory.

The second depth representation generation unit 206 is a functional unit for generating a third depth representation 209 by processing the second image 204 by a predetermined machine learning method and for generating a second depth representation 207 by processing the first image 203 by a predetermined machine learning method.

In addition, the second depth representation 207 and the third depth representation 209 herein are different from the first depth representation 208 generated from the parallax between the first image 203 and the second image 204, are depth representation obtained by performing a predetermined machine learning method on a single image, and provide satisfactory accuracy of depth information relating to a long-distance object.

The third depth representation generation unit 210 is a functional unit for generating a combined depth representation 212 by combining the first depth representation 208 with the second depth representation 207 and/or the third depth representation 209.

The combined depth representation 212 herein is depth representation that is generated by combining the second depth representation 207 and/or the third depth representation 209 that are depth representation based on the machine learning that represents accurate depth information relating to a long-distance object and the first depth representation 208 that is depth representation based on stereo images that represents accurate depth information relating to a short-distance object and includes highly accurate depth information on the entire area of a captured image.

In addition, the combined depth representation 212 can be generated from at least two items of depth representation including any one of the second depth representation 207 and the third depth representation 209 that are depth representation based on the machine learning that represents accurate depth information relating to a long-distance object, and the first depth representation 208 that is depth representation based on stereo images that represents accurate depth information relating to a short-distance object. However, in view of further improving the accuracy of depth determination, the combined depth representation 212 is preferably generated from three items of depth representation of the first depth representation 208, the second depth representation 207, and the third depth representation 209.

An obstacle detection unit 214 is a functional unit that generates obstacle information 216 relating to an obstacle near the moving body by using the combined depth representation 212 generated by the third depth representation generation unit 210 and outputs the obstacle information 216.

The obstacle information 216 herein includes information characterizing obstacles such as presence or absence, location, an estimated speed of movement, a direction of movement, a distance from a moving body, a category (a fallen tree or an animal), and the like of an obstacle that may block running of a train such as a fallen tree, an animal, a car, a pedestrian, a fire, submergence, a rail break. The obstacle information 216 may be transmitted, for example, to any notification destination such as a remote train operation management unit for controlling an operation of a train, a train operation management unit built in the train, a driver or crew of the train, a train different from the train that issues obstacle notification (such as a train within a predetermined radius), a police station, a fire station, a meteorological agency, a company, an institution, an organization, and an individual. The notification destination that receives the obstacle information 216 may take a measurement for improving the running safety of the train, for example, by controlling an operation of a train or dealing with the sensed obstacle.

In addition, the respective functional units included in the obstacle detection device 200 may be a software module that configures the obstacle detection application 350 in the computer system 300 illustrated in Fig. 1 and may be an independent dedicated hardware device. In addition, the functional units may be operated in the same computing circumstances or may be operated in dispersed computing circumstances.

The obstacle detection device 200 configured as described above can sense an object with high accuracy with respect to the entire area of the captured image by combining depth representation based on the machine learning (the second depth representation 207 and/or the third depth representation 209) that represents accurate depth information relating to a long-distance object and depth representation based on stereo images (208) that represents accurate depth information relating to a short-distance object. Accordingly, an obstacle that is present near a moving body such as a train can be accurately sensed, and thus the safety of running can be improved.

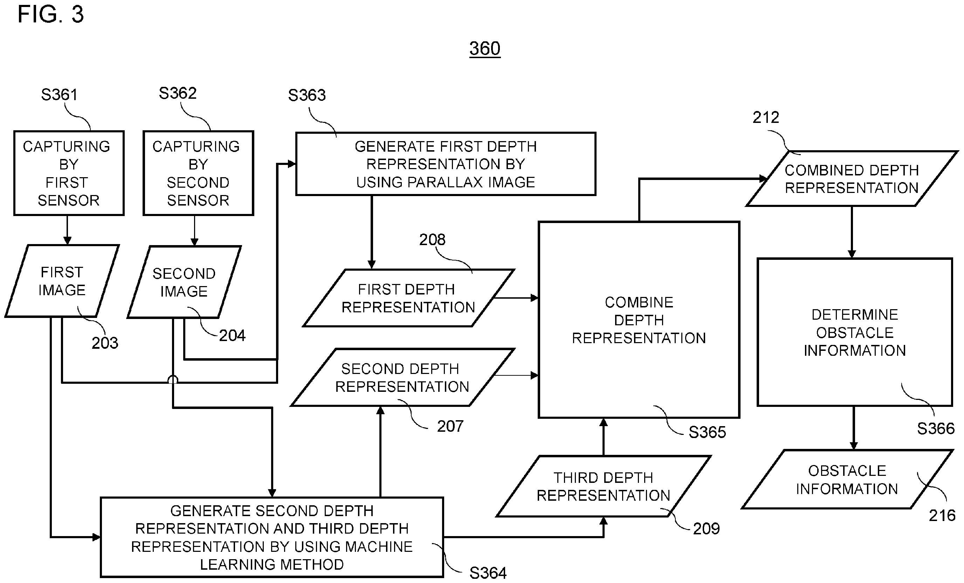

Next, with reference to Fig. 3, an obstacle detection method according to Example 1 of the present disclosure is described.

Fig. 3 is a flowchart illustrating an example of a flow of an obstacle detection method 360 according to Example 1 of the present disclosure. The obstacle detection method 360 illustrated in Fig. 3 is, for example, a process performed by the obstacle detection device 200 described with reference to Fig. 2 for detecting an obstacle that is present near the moving body.

First, in Steps S361 and S362, the first sensor and the second sensor (for example, the first sensor 201 and the second sensor 202 illustrated in Fig. 2) each capture the surrounding of the moving body and acquire the first image 203 and the second image 204. The first image 203 and the second image 204 herein each are images showing scenery near the moving body. In addition, as described below, the first image 203 and the second image 204 are used for generating the depth representation based on machine learning and the depth representation based on parallax between stereo images.

Next, in Step S363, a first depth representation generation unit (for example, the first depth representation generation unit 205 illustrated in Fig. 2) receives respective inputs of the first image 203 and the second image 204, generates a parallax image indicating parallax between the first image 203 and the second image 204 by the existing method, and then generates first depth representation by using the corresponding parallax image. The existing method herein may be, for example, a method based on epipolar geometry. The depth representation generated in this manner includes accurate depth information relating to a short-distance object.

Next, in Step S364, a second depth representation generation unit (for example, the second depth representation generation unit 206 illustrated in Fig. 2) receives respective inputs of the first image 203 and the second image 204 and performs a predetermined machine learning method on each of the first image 203 and the second image 204, to generate the second depth representation 207 and the third depth representation 209.

The predetermined machine learning method herein is a method of using a convolutional neural network trained by a learning image and a depth map corresponding to the corresponding learning image (for example, obtained by a so-called Structure From Motion; SFM method), extracting feature data of an object appearing on the first image 203 and the second image 204, and generating depth representation that represents a depth of the object appearing on the images based on the extracted feature data. The depth representation generated in this manner includes accurate depth information relating to a long-distance object compared with the depth representation generated based on parallax between stereo images.

The neural network herein may be configured with an input layer for receiving an input of a first image, an intermediate layer for extracting feature data of a context for characterizing an object in the first image, and an output layer for generating first depth representation that represents depth information per pixel of the first image by using the corresponding feature data of the context and outputting the first depth representation. In addition, the feature data of the context herein is information for characterizing a predetermined object, and examples thereof include a color, a shape, a size, and a class.

Next, in Step S365, a third depth representation generation unit (for example, the third depth representation generation unit 210 illustrated in Fig. 2) generates the combined depth representation 212 by combining the first depth representation 208 with the second depth representation 207 and/or the third depth representation 209.

The combined depth representation 212 herein is depth representation that is generated by combining the second depth representation 207 and/or the third depth representation 209 that are depth representation based on the machine learning that represents accurate depth information relating to a long-distance object with the first depth representation 208 that is depth representation based on stereo images that represents accurate depth information relating to a short-distance object, and includes highly accurate depth information with respect to the entire area of a captured image.

In addition, the combined depth representation 212 can be generated from at least two items of depth representation including any one of the second depth representation 207 and the third depth representation 209 that are depth representation based on the machine learning that represents accurate depth information relating to a long-distance object, and the first depth representation 208 that is depth representation based on stereo images that represents accurate depth information relating to a short-distance object. However, in view of further improving the accuracy of the depth determination, the combined depth representation 212 is preferably generated from three items of depth representation including the first depth representation 208, the second depth representation 207, and the third depth representation 209. In addition, herein, the number of items of depth representation used for generating the combined depth representation 212 is not particularly limited, and four or more items of depth representation may be used.

Next, in Step S366, an obstacle detection unit (for example, the obstacle detection unit 214 illustrated in Fig. 2) generates the obstacle information 216 relating to an obstacle near the moving body by analyzing the combined depth representation 212 generated by the third depth representation generation unit and outputs the obstacle information 216. As described above, the obstacle information 216 generated herein may be transmitted to any notification destination such as a driver or crew of a train, a train different from the train that issues obstacle notification (such as a train within a predetermined radius), a police station, a fire station, a meteorological agency, a company, an institution, an organization, and an individual.

By the obstacle detection method 360 described above, highly accurate object detection with respect to the entire area of a captured image is possible by combining depth representation based on the machine learning (the second depth representation 207 or the third depth representation 209) that represents accurate depth information relating to a long-distance object, and depth representation based on stereo images (208) that represents accurate depth information relating to a short-distance object. Accordingly, an obstacle that is present near a moving body such as a train can be accurately sensed, and thus the safety of running can be improved.

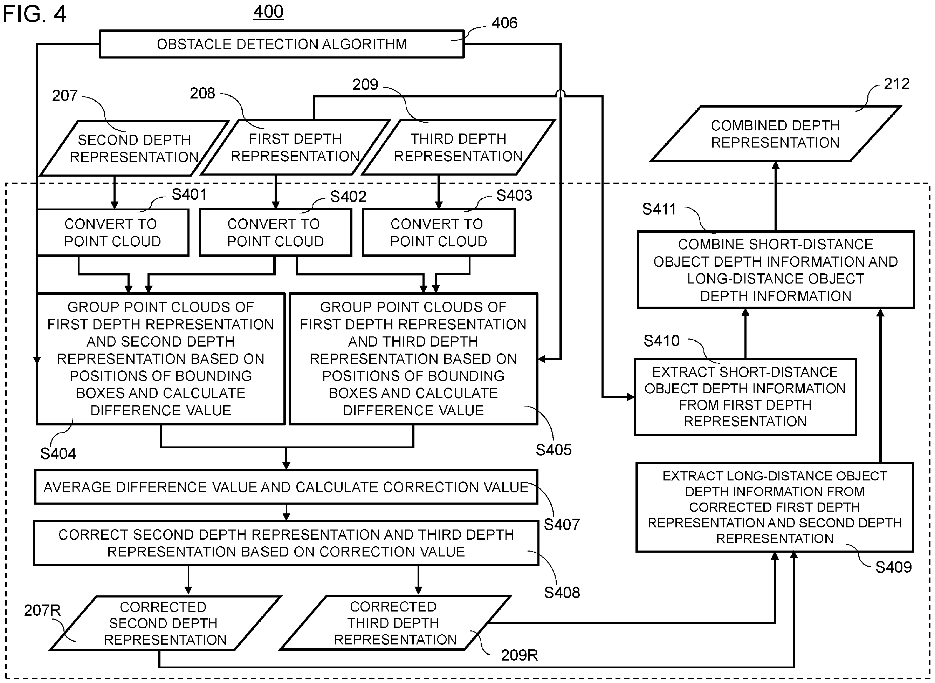

Next, with reference to Fig. 4, a process of generating combined depth representation according to Example 1 of the present disclosure is described.

Fig. 4 is a flowchart illustrating an example of a process (a combined depth representation generation process) 400 of generating combined depth representation according to Example 1 of the present disclosure. The combined depth representation generation process 400 illustrated in Fig. 4 is a process performed by the third depth representation generation unit described above (for example, the third depth representation generation unit 210 illustrated in Fig. 3).

First, in Steps S401, S402, and S403, the third depth representation generation unit converts the first depth representation 208, the second depth representation 207, and the third depth representation 209 into a point cloud, respectively. The point cloud herein is a set obtained by projecting depth pixels (pixels including depth information that represents distances from the moving body) in the depth representation to a three-dimensional space. For example, herein, the first depth representation 208, the second depth representation 207, and the third depth representation 209 that are so-called depth maps may be converted to the point clouds. Here, a grouping process described below becomes easier by converting the depth maps into the point clouds.

Subsequently, in Step S404, the third depth representation generation unit calculates a depth difference value that indicates a difference between depths of the first depth representation 208 and the second depth representation 207 by comparing the point cloud that is generated in Step S402 and corresponds to the first depth representation 208 (depth representation generated based on parallax between stereo images) and the point cloud generated in Step S401 and corresponds to the second depth representation 207 (depth representation generated by performing a predetermined machine learning method on the first image).

More specifically, in Step S404, the third depth representation generation unit calculates the depth difference value that indicates the difference between the depths of the first depth representation 208 and the second depth representation 207 by grouping corresponding objects between respective point clouds based on positions of bounding boxes defined by a predetermined object detection algorithm (406) and then comparing results of grouping in the respective point clouds. In addition, details of this process are described below.

Next, in Step S405, the third depth representation generation unit calculates a depth difference value that indicates a difference between depths of the first depth representation 208 and the third depth representation 209 by comparing the point cloud that is generated in Step S402 and corresponds to the first depth representation 208 (depth representation generated based on parallax between stereo images) with the point cloud that is generated in Step S403 and corresponds to the third depth representation 209 (depth representation generated by performing a predetermined machine learning method on the second image).

More specifically, in Step S405, the third depth representation generation unit calculates the depth difference value that indicates the difference between the depths of the first depth representation 208 and the third depth representation 209 by grouping corresponding objects between respective point clouds based on positions of the bounding boxes defined by the predetermined object detection algorithm (406) and then comparing results of grouping in the respective point clouds. In addition, details of this process are described below.

Next, in Step S407, the third depth representation generation unit averages the difference values calculated in Steps S404 and S405 and calculates correction values. The correction values herein are values for matching the depths of the point clouds of the respective items of depth representation and used in S408 described below.

Next, in Step S408, the third depth representation generation unit generates a corrected second depth representation 207R and a corrected third depth representation 209R by correcting the second depth representation 207 and the third depth representation 209 based on the correction values calculated in Step S407. Accordingly, the difference between the depths of the second depth representation and the third depth representation is corrected, and the depths of the second depth representation 207 and the third depth representation 209 are matched with each other.

Next, in Step S409, the third depth representation generation unit extracts depth information of the object that is present at a predetermined distance or more from the moving body, from the corrected second depth representation 207R and the corrected third depth representation 209R, as long-distance object depth information. For example, here, the third depth representation generation unit may extract the depth information of the object that is present out of the area of the field of view of the first depth representation as long-distance object depth information.

Next, in Step S410, the third depth representation generation unit extracts the long-distance object depth information that indicates the depth information of the object that is present at less than a predetermined distance from the moving body, from the first depth representation. For example, here, the third depth representation generation unit may extract the depth information of the object that is present within the area of the field of view of the first depth representation as short-distance object depth information.

Next, in Step S411, the third depth representation generation unit generates the combined depth representation described above by combining the long-distance object depth information extracted in Step S409 and the short-distance object depth information extracted in Step S410. Here, as a means for combining the long-distance object depth information and the short-distance object depth information, any existing method, for example, High Pass filtering, HIS transform based image fusion, PCA based image fusion, wavelet transform image fusion, and pair-wise spatial frequency matching may be used.

By the combined depth representation generation process described above, the depth representation based on the machine learning (the second depth representation 207 or the third depth representation 209) that represents the accurate depth information relating to the long-distance object and the depth representation based on stereo images (208) that represents the accurate depth information relating to the short-distance object are combined, so that the combined depth representation including the highly accurate depth information with respect to the entire area of the captured image can be generated. In addition, an object is sensed based on the combined depth representation including such highly accurate depth information, an object such as an obstacle that is present near the moving body can be reliably determined, and the running safety of the moving body can be improved.

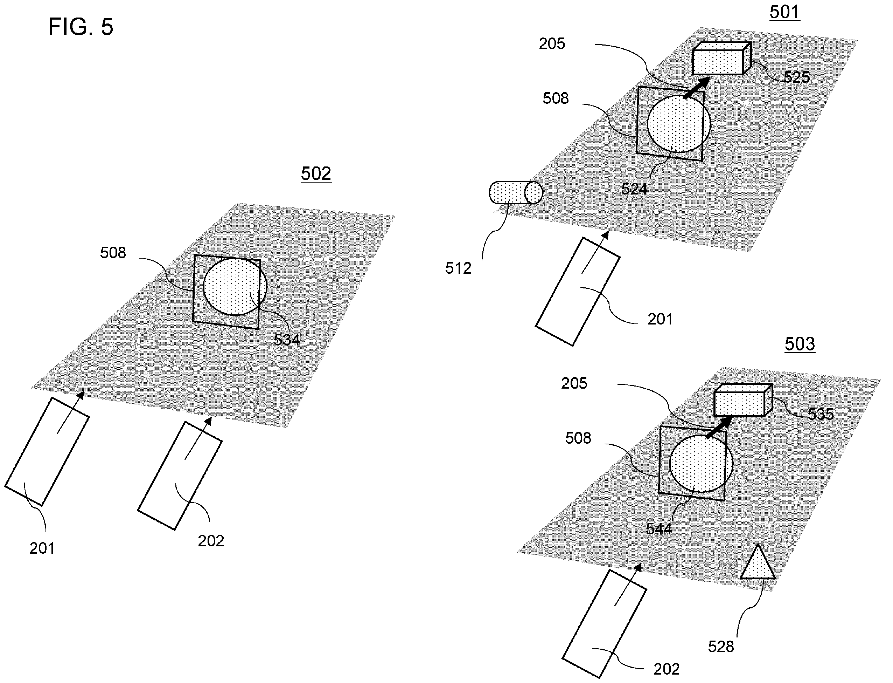

Next, with reference to Fig. 5, a specific example of a process using a point cloud according to Example 1 of the present disclosure is described.

Fig. 5 is a diagram illustrating the specific example of the process of using the point cloud according to Example 1 of the present disclosure. In Fig. 5, a point cloud 502 corresponding to the first depth representation (depth representation generated based on parallax between stereo images), a point cloud 501 corresponding to the second depth representation (the depth representation generated by performing a predetermined machine learning method on the first image), and a point cloud 503 corresponding to the third depth representation (the depth representation generated by performing a predetermined machine learning method on the second image) are illustrated. These point clouds 501, 502, and 503 are point clouds generated in S401, S402, and S403 of the combined depth representation generation process 400 described with reference to Fig. 4.

In addition, the specific examples described with reference to Fig. 5 substantially correspond to Steps S405 and S406 in the combined depth representation generation process 400 described with reference to Fig. 4.

As described above, the first sensor 201 and the second sensor 202 installed in the moving body have different capturing areas depending on installed angles. Therefore, in the point cloud 502 corresponding to the first depth representation generated based on parallax between stereo images, the point cloud 501 corresponding to the second depth representation generated by performing a predetermined machine learning method on the first image, and the point cloud 503 corresponding to the third depth representation generated by performing a predetermined machine learning method on the second image, the difference in depth may occur, and also appearing objects may be different.

Accordingly, in order to acquire the accurate depth information, it is preferable to calculate depth difference between the point clouds and perform correction for matching the depths of the point clouds with each other. Here, according to the present example, the accurate depth information can be acquired by using a bounding box defined by a predetermined object detection algorithm, grouping (associating) the same objects between a plurality of point clouds, calculating the depth difference between the point clouds by comparing these groups, and then correcting the point cloud by using the correction values obtained from the corresponding depth difference.

As described above, due to the deviations of the angles or fields of view of the first sensor 201 and the second sensor 202 and the like, not all objects appear on all the images and in all the depth representation. For example, it is assumed that a first cylindrical obstacle, a second spherical obstacle, a third box-shaped obstacle, and a fourth triangular obstacle are actually present in scenes captured by the first sensor 201 and the second sensor 202. However, due to the limitation on the angles or capturing areas of the first sensor 201 and the second sensor 202, or the like, the first cylindrical obstacle appears as a first obstacle 512 in the point cloud 501, but does not appear in the point cloud 502 and the point cloud 503. In addition, the second triangular obstacle appears as a second obstacle 528 in the point cloud 503 but does not appear in the point cloud 501 and the point cloud 503. Further, the third box-shaped obstacle appears as a third obstacle 525 in the point cloud 501 and appears as a third obstacle 535 in the point cloud 503, but does not appear in the point cloud 501 (for example, out of the capturing area of the stereo camera). Meanwhile, the third spherical obstacle appears as a third obstacle 524 in the point cloud 501, appears as a third obstacle 534 in the point cloud 502, and appears as a third obstacle 544 in the point cloud 503.

After the conversion to the point clouds from the depth representation in S401, S402, and S403 of the combined depth representation generation process 400 as described above with reference to Fig. 4 is completed, the third depth representation generation unit groups the corresponding objects (that is, the same objects) by comparing the respective point clouds with each other by using a bounding box 508 defined by a predetermined object detection algorithm. For example, herein, the third depth representation generation unit may group the third obstacle 524 that appears in the point cloud 501, the third obstacle 534 that appears in the point cloud 502, and the third obstacle 544 that appears in the point cloud 503 in an associated manner. Thereafter, the third depth representation generation unit calculates the difference value indicating the depth difference between the point clouds of the grouped objects.

In addition, the bounding box 508 herein designates an area of a field of a comparison target in the point cloud, and the size and position of the bounding box 508 may be set, for example, based on what is present in a railway environment, such as a utility pole and a railroad track. By using the bounding box 508, the accurate depth information relating to a specific object can be acquired. In addition, by limiting a field to be a comparison target by using the bounding box 508, a computing resource required for a process can be suppressed.

After the difference value indicating the depth difference between the point clouds is calculated, the third depth representation generation unit averages the difference values calculated per object to obtain the correction value. As described above, the correction value is a value for matching the depth of the point cloud of each depth representation.

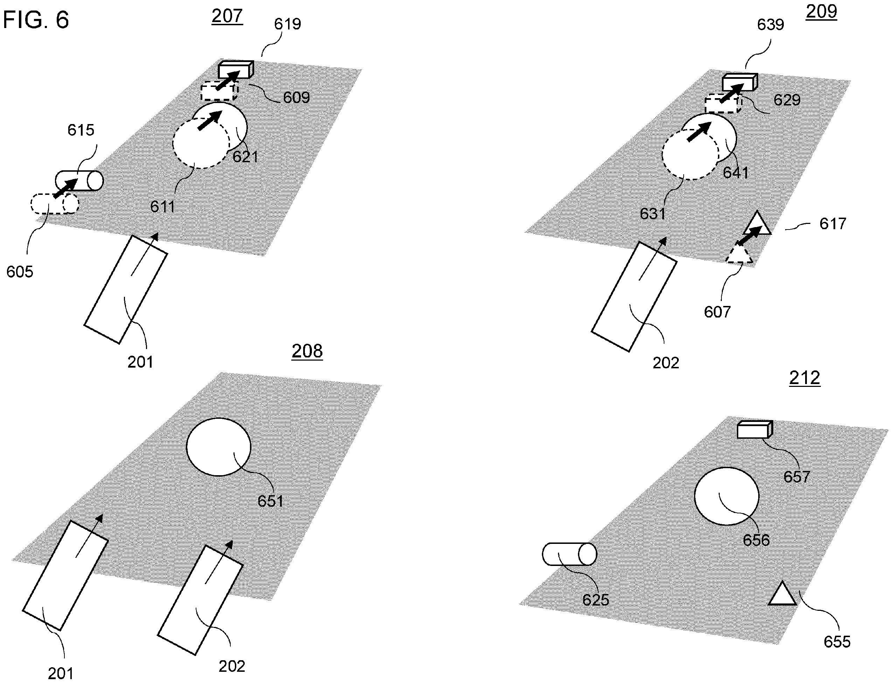

Next, a specific example of a process of correcting the depth representation according to Example 1 of the present disclosure is described with reference to Fig. 6.

Fig. 6 is a diagram illustrating the specific example of the process of correcting the depth representation according to Example 1 of the present disclosure. The specific example illustrated in Fig. 6 is an example of the process of correcting the depth representation by using the correction value calculated in Steps S404 to S406 in the combined depth representation generation process 400 described with reference to Fig. 4, and substantially corresponds to Steps S406 to S411 in the combined depth representation generation process 400 described with reference to Fig. 4.

The second depth representation 207, the third depth representation 209, the first depth representation 208, and the combined depth representation 212 are illustrated in Fig. 6. As described above, due to deviations of angles or fields of view of the first sensor 201 and the second sensor 202 and the like, not all objects appear on all the image and in all the depth representation.

For example, it is assumed that a first cylindrical obstacle, a second spherical obstacle, a third box-shaped obstacle, and a fourth triangular obstacle are actually present in scenes captured by the first sensor 201 and the second sensor 202. However, due to the limitation of the angles or capturing areas of the first sensor 201 and the second sensor 202 and the like, first cylindrical obstacles (605, 615, and 625) appear in the second depth representation 207, but do not appear in the third depth representation 209 and the first depth representation 208.

In addition, fourth triangular obstacles (607 and 617) appear in the third depth representation 209 but do not appear in the first depth representation 208. Further, third box-shaped obstacles (609, 619, 629, and 639) appear in the second depth representation 207 and the third depth representation 209, but do not appear in the first depth representation 208. Meanwhile, second spherical obstacles (611, 621, 631, 641, and 651) appear in the second depth representation 207, the third depth representation 209, and the first depth representation 208.

As described above, the third depth representation generation unit generates the corrected depth representation by performing correction for matching the depths of the depth representation by using the correction value calculated in Steps S404 to S406 in the combined depth representation generation process 400 described with reference to Fig. 4.

For example, as illustrated in Fig. 6, in the second depth representation 207, based on the calculated correction value, the third depth representation generation unit corrects the depth of the first obstacle from 605 to 615, corrects the depth of the second obstacle from 611 to 621, and corrects the depth of the third obstacle from 609 to 619. In the same manner, as illustrated in Fig. 6, in the third depth representation 209, based on the calculated correction value, the third depth representation generation unit corrects the depth of the second obstacle from 631 to 641, corrects the depth of the third obstacle from 629 to 639, and corrects the depth of the fourth obstacle from 607 to 617. Accordingly, the corrected second depth representation and the corrected third depth representation (207R and 209R illustrated in Fig. 4) in which the depth information of the sensed object is modified can be obtained.

After the second depth representation and the third depth representation are corrected, the third depth representation generation unit extracts the depth information of the objects that are present at a predetermined distance or more from the moving body, from the corrected second depth representation and the corrected third depth representation, as long-distance object depth information. For example, here, the third depth representation generation unit may extract depth information (for example, depth information of the first obstacle and depth information of the third obstacle) of objects that are present out of the area of the field of view of the first depth representation as long-distance object depth information. Subsequently, the third depth representation generation unit extracts the long-distance object depth information indicating the depth information of the objects that are present at less than the predetermined distance from the moving body, from the first depth representation. For example, here, the third depth representation generation unit may extract the depth information of the object (for example, the second obstacle) that is present within the area of the field of view of the first depth representation as short-distance object depth information.

Next, the third depth representation generation unit generates the combined depth representation 212 by combining the extracted long-distance object depth information and the extracted short-distance object depth information. In the combined depth representation 212, the first obstacle, the second obstacle, the third obstacle, and the fourth obstacle are displayed with correct depths (625, 655, 656, and 657).

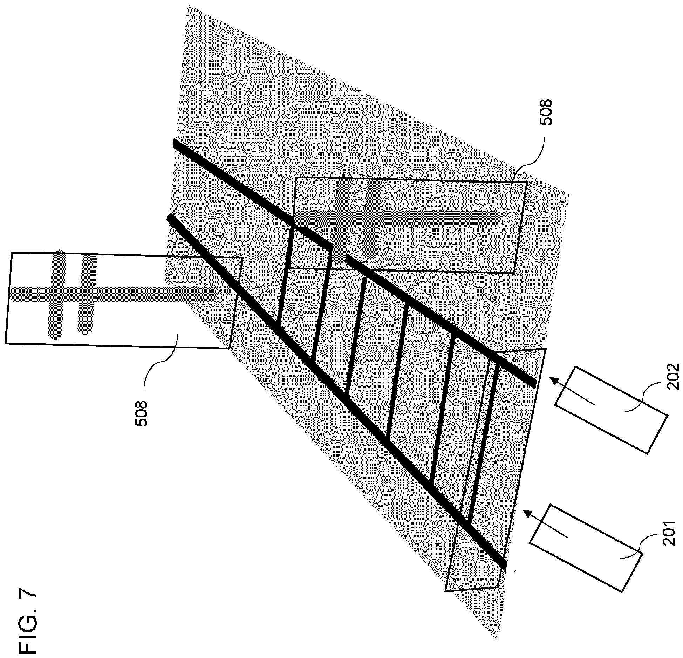

Next, with reference to Fig. 7, a bounding box in the combined depth representation generation process according to Example 1 of the present disclosure is described.

Fig. 7 is a diagram illustrating a specific example of the bounding box in the combined depth representation generation process 400 according to Example 1 of the present disclosure. As described above, the bounding box 508 designates the areas of the fields of the comparison targets in the point clouds illustrated in Figs. 4 and 5, and the size and the position of the bounding box 508 may be set based on what is present in a railway environment, such as a utility pole and a railroad track.

As illustrated in Fig. 7, the bounding box 508 may be set with respect to an object (for example, a utility pole) having a different depth. Thereafter, the third depth representation generation unit calculates the correction value for correcting depth information of each object in a different depth area based on the position of the bounding box. For example, the third depth representation generation unit may calculate a first correction value for correcting depth information of an object that is present in the depth area of 10 meters to 100 meters based on an object having a depth of 50 meters and calculate a second correction value for correcting depth information of an object that is present in a depth area of 100 meters to 200 meters based on an object having a depth of 150 meters.

Herein, depth information may be corrected based on one or a plurality of bounding boxes. In case of one bounding box, with respect to each depth pixel i in the depth representation, a correction value $\Delta r_i$ for correcting depth information of the corresponding depth pixel i is obtained by Equation 2.

[Equation 2]

$$\Delta r_i = depth_{stereo} - depth_{single}$$

Here, $depth_{stereo}$ refers to a depth in first depth representation of the corresponding depth pixel i, and $depth_{single}$ refers to a depth in second depth representation or third depth representation of the corresponding depth pixel i.

Accordingly, after the correction value $\Delta r_i$ for correcting the depth information of the depth pixel i, a depth $depth_r$ after the correction of the depth pixel i is obtained by Equation 3.

[Equation 3]

$$depth_r = depth_{single} * (1 + \Delta r_i)$$

In addition, in case of two bounding boxes, with respect to each depth pixel i of two objects (for example, a first object that is present in a depth area of 10 meters to 100 meters and a second object that is present in a depth area of 100 meters to 200 meters) that are present in a different depth area in the depth representation, the correction value $\Delta r_i$ (a correction value of the first object is set as $\Delta r_1$, and a correction value of the second object is set as $\Delta r_2$) for correcting the depth information of the corresponding depth pixel i is obtained by Equation 4.

$$[Equation\ 4]$$

$$\Delta r_i = depth^i_{stereo} - depth^i_{single},$$

where i = {1, 2}

After the correction value $\Delta r_1$ of the first object and the correction value $\Delta r_2$ of the second object are obtained, a ratio $\varepsilon$ of the correction value in a different depth area is obtained by Equation 5.

$$[Equation\ 5]$$

$$\varepsilon = (\Delta r_2 - \Delta r_1)\ /\ distance\ between\ first\ object\ and$$

$$second\ object$$

Accordingly, after the ratio $\varepsilon$ of the correction value is obtained, a depth $depth_r$ after the correction of the depth pixel i is obtained by Equation 6.

$$[Equation\ 6]$$

$$depth_r = depth_{single} * (1 + \varepsilon)$$

For example, when the third depth representation generation unit determines that the correction value $\Delta r_1$ is "-10" meters with respect to the first object having a depth of 50 meters and determines that the correction value $\Delta r_2$ is "-30" meters with respect to the second object having a depth of 150 meters, the ratio $\varepsilon$ of the correction value is "-0.2". Accordingly, a depth $depth_r$ after the correction of the object having a depth of 300 meters in the second depth representation or the third depth representation becomes 240 (300 * (1 - 0.2)).

[Example 2]

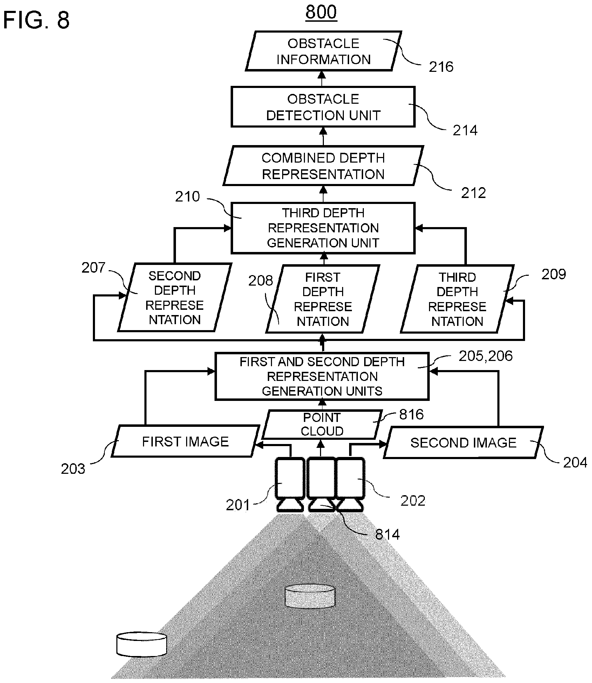

Next, with reference to Fig. 8, a hardware configuration of an obstacle detection device according to Example 2 of the present disclosure is described.

Fig. 8 is a diagram illustrating a hardware configuration of an obstacle detection device 800 according to Example 2 of the present disclosure. The obstacle detection device 800 illustrated in Fig. 8 includes a light detection and ranging (LIDAR) unit 814 in addition to the configuration of the obstacle detection device 200 illustrated in Fig. 2.

A point cloud 816 (also referred to as "fourth depth representation") including depth information with higher accuracy with respect to an object that is present near the moving body can be acquired by using the LIDAR unit 814, and thus an obstacle can be sensed with higher accuracy than the obstacle detection device 200 according to Example 1, by correcting the first depth representation 208 that is depth representation generated based on parallax between stereo images based on the point cloud 816.

In addition, according to the present example, the description is made on the assumption that the first depth representation, the second depth representation, and the third depth representation are used as depth maps, but the present disclosure is not limited to this, and a different data structure may be used, as long as the depth representation indicates a distance from the moving body to an object that is present near the corresponding moving body.

The obstacle detection device 800 according to Example 2 is substantially the same as the obstacle detection device 200 according to Example 1 except for including the LIDAR unit 814 that generates the point cloud 816, and thus herein, the description of the common configurations is omitted.

As illustrated in Fig. 8, the LIDAR unit 814 is installed together with the first sensor 201 and the second sensor 202. By correcting the first depth representation 208 that is depth representation generated based on parallax between stereo images based on the point cloud 816 output by the LIDAR unit 814, the generation of the corrected first depth representation having the depth information with higher accuracy becomes easier.

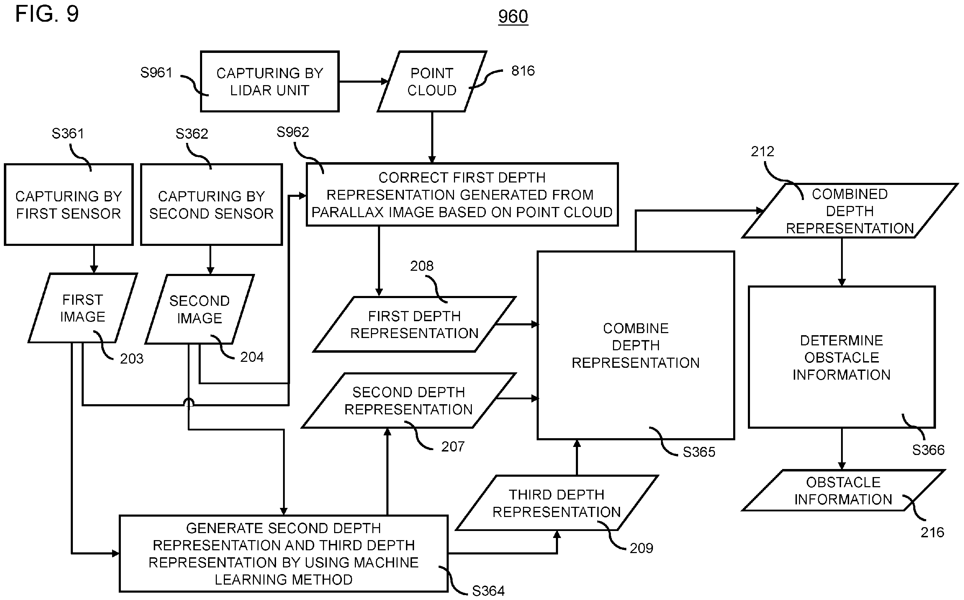

Next, with reference to Fig. 9, an obstacle detection method according to Example 2 of the present disclosure is described.

Fig. 9 is a flowchart illustrating an example of a flow of an obstacle detection method 960 according to Example 2 of the present disclosure. The obstacle detection method 960 illustrated in Fig. 9 is a process that is performed, for example, by the obstacle detection device 800 described with reference to Fig. 8 for detecting an obstacle that is present near the moving body.

In addition, the obstacle detection method 960 illustrated in Fig. 9 is different from the obstacle detection method 360 as illustrated in Fig. 3 described above, in that the first depth representation that is depth representation generated based on parallax between stereo images by using a point cloud acquired by a LIDAR unit is corrected. Except for this, the obstacle detection method 960 illustrated in Fig. 9 is substantially the same as the obstacle detection method 360 illustrated in Fig. 3 described above, and thus herein, the description of the common steps is omitted.

In Step S961, the LIDAR unit outputs the point cloud 816 indicating the surrounding environment of the moving body by deflecting laser light to irradiate the surrounding of the moving body and observing scattered and reflected light thereof. As described above, the point cloud 816 herein is a set of depth information in a three-dimensional space indicating a distance to a target object near the moving body acquired by the LIDAR unit.

In addition, the number of items of depth information per target object and the resolution are determined by a scanning method, such as the interval at which the laser light is deflected.

In Step S962, the first depth representation generation unit receives inputs of the first image 203 and the second image 204, generates a parallax image indicating parallax between the first image 203 and the second image 204 by an existing method, and then generates first depth representation by using the corresponding parallax image. Thereafter, the first depth representation generation unit generates the corrected first depth representation by correcting the corresponding first depth representation based on a point cloud generated in Step S961.

In addition, details of a process of correcting the first depth representation based on a point cloud are described below.

After the corrected first depth representation is generated, the third depth representation generation unit generates the combined depth representation 212 by combining the corrected first depth representation 208 with the second depth representation 207 or the third depth representation 209.

In this manner, by correcting the first depth representation that is depth representation generated based on parallax between stereo images based on the point cloud 816, an obstacle can be sensed with higher accuracy than in Example 1.

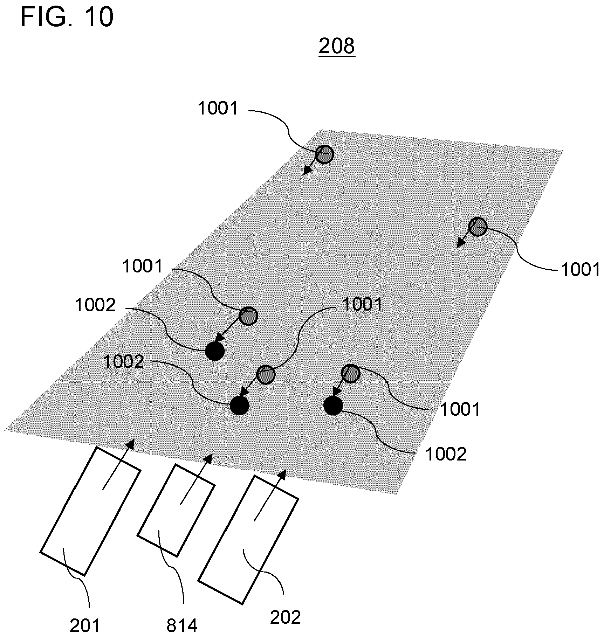

Next, a process of correcting the first depth representation according to Example 2 of the present disclosure is described with reference to Fig. 10.

Fig. 10 is a diagram illustrating an example of a process of correcting the first depth representation 208 according to Example 2 of the present disclosure. The process of correcting the first depth representation 208 is a process performed, for example, by the first depth representation generation unit 205 illustrated in Fig. 8 for generating depth representation including depth information with higher accuracy.

The first depth representation 208 is illustrated in Fig. 10. With respect to each point (for example, a pixel or vertex of an object) 1001 in the first depth representation 208, the first depth representation generation unit specifies a point corresponding to (for example, at less than a predetermined distance from) the corresponding point in a point cloud (for example, the point cloud 816 generated by the LIDAR unit 814 as illustrated in Fig. 8) and calculates a difference value indicating a difference in depths of the points 1001 of the depth representation 208 and the point of the point cloud.

Thereafter, the first depth representation generation unit averages difference values calculated with respect to the respective points to obtain a correction value. Finally, the first depth representation generation unit generates the corrected first depth representation by respectively moving the points 1001 of the depth representation 208 to correct depths 1002 based on the calculated correction value.

Accordingly, compared with Example 1, depth representation including depth information with higher accuracy can be generated, and thus an obstacle can be sensed with higher accuracy.

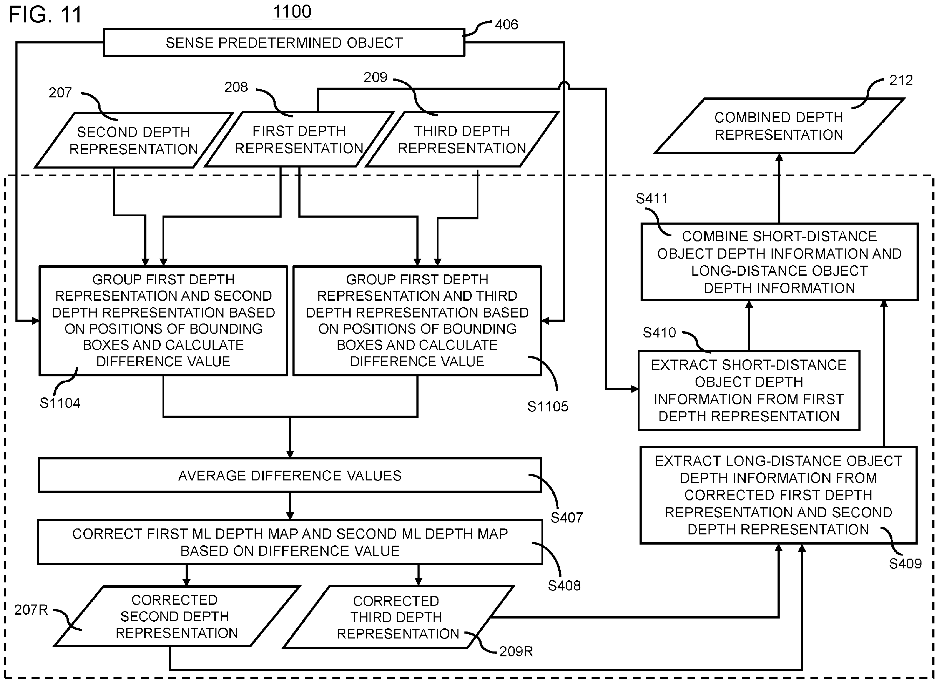

Next, with reference to Fig. 11, a process of generating the combined depth representation according to Example 3 of the present disclosure is described.

Fig. 11 is a flowchart illustrating an example of a process (combined depth representation generation process) 1100 of generating the combined depth representation according to Example 3 of the present disclosure. The combined depth representation generation process 1100 illustrated in Fig. 11 is a process performed by the third depth representation generation unit (for example, the third depth representation generation unit 210 illustrated in Fig. 3) described above.

The combined depth representation generation process 1100 illustrated in Fig. 11 is different from the combined depth representation generation process 1100 in Example 1 described above in that direct grouping is performed on the depth representation without converting the first depth representation 208, the second depth representation 207, and the third depth representation 209 to point clouds. In this manner, computing resources can be saved more than in Example 1 by omitting a process of converting the first depth representation 208, the second depth representation 207, and the third depth representation 209 to point clouds. However, the format of the bounding box is two-dimensional, and thus grouping cannot be performed by a three-dimensional bounding box.

In addition, according to the present example, the description is made on the assumption that the first depth representation, the second depth representation, and the third depth representation are used as depth maps, but the present disclosure is not limited to this, and a different data structure may be used, as long as the depth representation indicates a distance from the moving body to an object that is present near the corresponding moving body.

The combined depth representation generation process 1100 according to Example 3 is substantially the same as the combined depth representation generation process 400 according to Example 1 except for omitting the process of converting the first depth representation 208, the second depth representation 207, and the third depth representation 209 to point clouds, and thus herein, the description of the common steps is omitted.

In Step S1104, the third depth representation generation unit calculates a depth difference value indicating the difference between the depths of the first depth representation 208 and the second depth representation 207 by comparing the first depth representation 208 (depth representation generated based on parallax between stereo images) with the second depth representation 207 (depth representation generated by performing a predetermined machine learning method on the first image).

More specifically, in Step S1104, the third depth representation generation unit calculates a depth difference value indicating the difference between the depths of the first depth representation 208 and the second depth representation 207 by grouping corresponding objects between respective items of depth representation based on positions of the bounding boxes defined by the predetermined object detection algorithm (406) and then comparing results of grouping in the respective items of depth representation. In addition, details of this process have been described with reference to Figs. 4 to 6 and thus are omitted herein.

Next, in Step S1105, the third depth representation generation unit calculates a depth difference value indicating the difference between the depths of the first depth representation 208 and the third depth representation 209 by comparing the first depth representation 208 (depth representation generated based on parallax between stereo images) with the third depth representation 209 (depth representation generated by performing a predetermined machine learning method on the second image).

More specifically, in Step S1105, the third depth representation generation unit calculates the depth difference value indicating the difference between the depths of the first depth representation 208 and the third depth representation 209 by grouping corresponding objects between the respective items of depth representation based on the positions of the bounding boxes defined by the predetermined object detection algorithm (406) and then comparing results of grouping in the respective items of depth representation. In addition, details of this process have been described with reference to Figs. 4 to 6 and thus are omitted herein.

In this manner, computing resources can be saved more than in Example 1 by omitting the process of converting the first depth representation 208, the second depth representation 207, and the third depth representation 209 to point clouds and performing direct grouping on the depth representation.

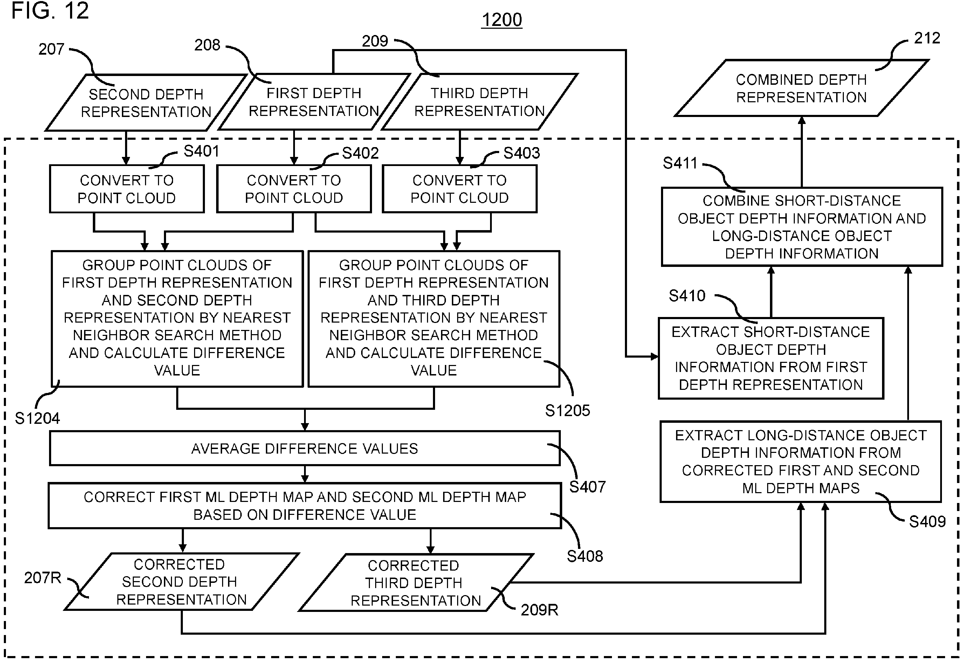

Next, with reference to Fig. 12, a process of generating the combined depth representation according to Example 4 of the present disclosure is described.

Fig. 12 is a flowchart illustrating an example of a process (a combined depth representation generation process) 1200 of generating the combined depth representation according to Example 4 of the present disclosure. The combined depth representation generation process 1200 illustrated in Fig. 12 is a process performed by the third depth representation generation unit (for example, the third depth representation generation unit 210 illustrated in Fig. 3) described above.

The combined depth representation generation process 1200 illustrated in Fig. 12 is different from the combined depth representation generation process 1100 in Example 1 described above in that grouping is performed by using a nearest neighbor search method instead of grouping by a bounding box. By performing grouping by using the nearest neighbor search method instead of grouping by a bounding box, it is possible to deal with two-dimensional and three-dimensional data and also save computing resources more than in Example 1.

Nearest neighbor search (NNS) is a solution method for searching for the nearest point in a metric space such as a point cloud and includes linear search and space division methods or the like.

In addition, according to the present example, the description is made on the assumption that the first depth representation, the second depth representation, and the third depth representation are used as depth maps, but the present disclosure is not limited to this, and a different data structure may be used, as long as the depth representation indicates a distance from the moving body to an object that is present near the corresponding moving body.

In addition, the combined depth representation generation process 1200 described according to Example 4 is substantially the same as the combined depth representation generation process 400 described according to Example 1, except that the combined depth representation generation process 1200 illustrated in Fig. 12 performs grouping by using the nearest neighbor search method instead of grouping by a bounding box, and thus the description of the common steps is omitted.

In Step S1204, the third depth representation generation unit calculates a depth difference value indicating the difference between the depths of the first depth representation 208 and the second depth representation 207 by comparing the point cloud that is generated in Step S402 and corresponds to the first depth representation 208 (depth representation generated based on parallax between stereo images) with the point cloud that is generated in Step S401 and corresponds to the second depth representation 207 (depth representation generated by performing a predetermined machine learning method on the first image).

More specifically, in Step S1204, the third depth representation generation unit calculates the depth difference value indicating the difference between the depths of the first depth representation 208 and the second depth representation 207 by performing the nearest neighbor search method on the point cloud corresponding to the first depth representation 208 and the point cloud corresponding to the second depth representation 207 to group the nearest points between these point clouds and comparing results of grouping.

Next, in Step S1205, the third depth representation generation unit calculates the depth difference value indicating the difference between the depths of the first depth representation 208 and the third depth representation 209 by comparing the point cloud that is generated in Step S402 and corresponds to the first depth representation 208 (depth representation generated based on parallax between stereo images) with the point cloud that is generated in Step S403 and corresponds to the third depth representation 209 (depth representation generated by performing a predetermined machine learning method on the second image).

More specifically, in Step S1205, the third depth representation generation unit calculates the depth difference value indicating the difference between depths of the first depth representation 208 and the third depth representation 209 by performing the nearest neighbor search method on the point cloud corresponding to the first depth representation 208 and the point cloud corresponding to the third depth representation 209 to group the nearest points between these point clouds and comparing results of grouping.

In the combined depth representation generation process 1200 according to Example 4 described above, by performing grouping by the nearest neighbor search method instead of the grouping by the bounding box, it is possible to deal with two-dimensional and three-dimensional data and also save computing resources more than in Example 1.

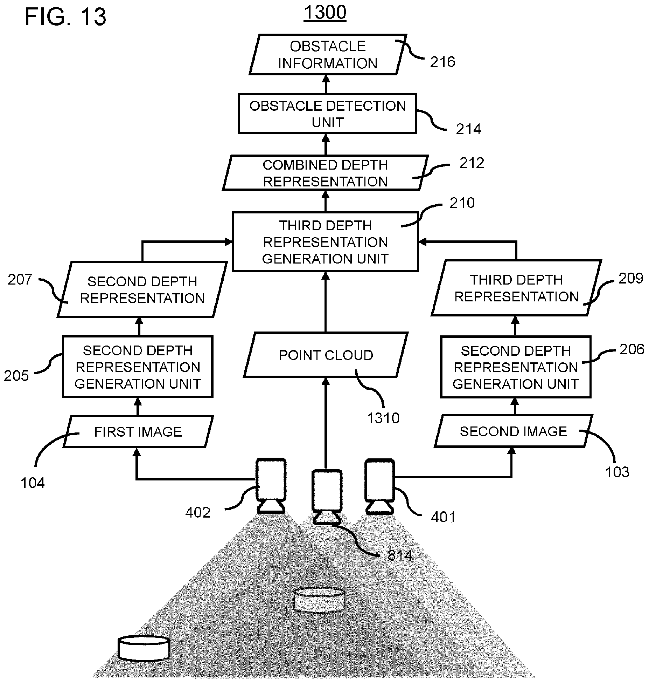

Next, with reference to Fig. 13, a hardware configuration of the obstacle detection device according to Example 5 of the present disclosure is described.

Fig. 13 is a diagram illustrating a hardware configuration of an obstacle detection device 1300 according to Example 5 of the present disclosure. The obstacle detection device 1300 illustrated in Fig. 13 is different from the configuration of the obstacle detection device 800 according to Example 2 in that a first depth representation generation unit for generating first depth representation that is depth representation generated based on parallax between stereo images is omitted, and a point cloud 1310 output from the LIDAR unit 814 is used instead of the first depth representation.

By using the point cloud 1310 output from the LIDAR unit 814 instead of the first depth representation, the depth representation in which the accuracy of the depth information with respect to a long-distance object is limited and which is generated based on parallax between stereo images becomes unnecessary, and thus obstacle can be sensed with higher accuracy.

In addition, according to the present example, the description is made on the assumption that the second depth representation and the third depth representation are used as depth maps, but the present disclosure is not limited to this, and a different data structure may be used, as long as the depth representation indicates a distance from the moving body to an object that is present near the corresponding moving body.

In addition, the obstacle detection device 1300 according to Example 5 is substantially the same as the obstacle detection device 800 according to Example 2 except that the point cloud 1310 output from the LIDAR unit 814 is used instead of the first depth representation, and thus herein, the description of the common configurations is omitted.

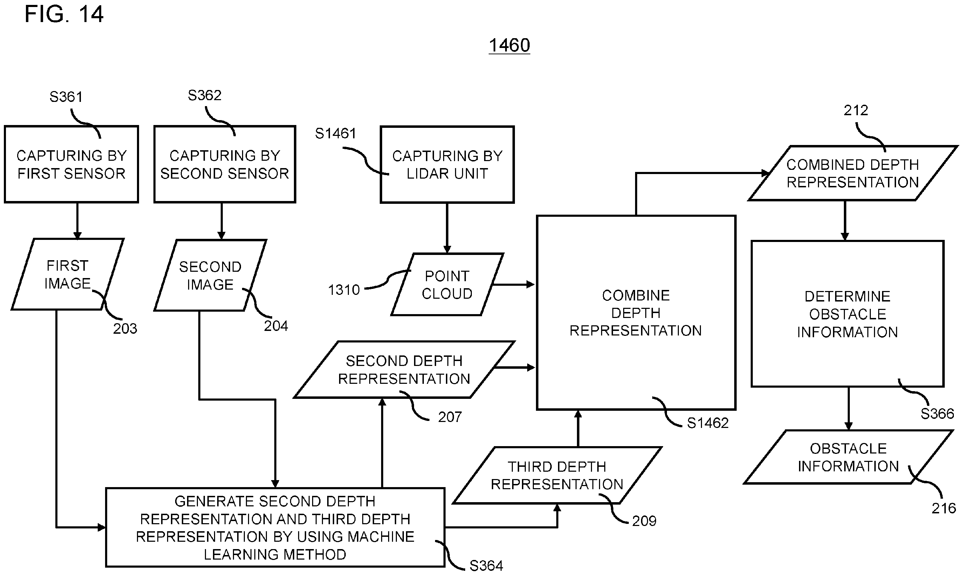

Next, with reference to Fig. 14, an obstacle detection method according to Example 5 of the present disclosure is described.

Fig. 14 is a flowchart illustrating an example of a flow of an obstacle detection method 1460 according to Example 5 of the present disclosure. The obstacle detection method 1460 illustrated in Fig. 14 is a process performed, for example, by the obstacle detection device 1300 described with reference to Fig. 13 for detecting an obstacle that is present near the moving body.

In addition, the obstacle detection method 1460 illustrated in Fig. 14 is different from the obstacle detection method 360 illustrated in Fig. 3 described above in that the point cloud 1310 output from the LIDAR unit is used instead of the first depth representation. Except for this, the obstacle detection method 1460 illustrated in Fig. 14 is substantially the same as the obstacle detection method 360 illustrated in Fig. 3 described above, and thus herein, the description of the common steps is omitted.

In Step S1461, the LIDAR unit captures the surrounding of the moving body and outputs the point cloud 1310 indicating the captured scene. As described above, the point cloud 1310 herein is a set of depth information on a three-dimensional space indicating a distance to a target object near the moving body acquired by the LIDAR unit.

In Step S1462, the third depth representation generation unit (for example, the third depth representation generation unit 210 illustrated in Fig. 13) generates the combined depth representation 212 by combining the point cloud 1310 with the second depth representation 207 or the third depth representation 209.

The combined depth representation 212 herein is generated from the point cloud including depth information with higher accuracy than the second depth representation 207 and/or the third depth representation 209 that are depth representation based on the machine learning that represents accurate depth information relating to a long-distance object and the depth representation generated based on parallax between stereo images and thus an obstacle can be sensed with higher accuracy, for example, than in Example 1.

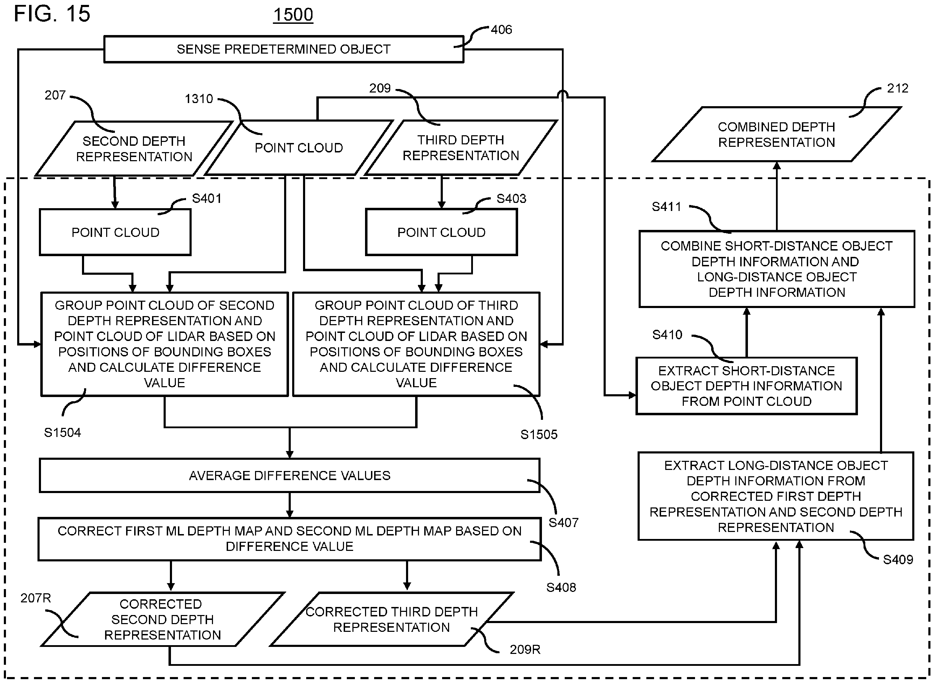

Next, with reference to Fig. 15, a process of generating the combined depth representation according to Example 5 of the present disclosure is described.

Fig. 15 is a flowchart illustrating an example of a process (a combined depth representation generation process) 1500 of generating the combined depth representation according to Example 5 of the present disclosure. The combined depth representation generation process 1500 illustrated in Fig. 15 is a process performed by the third depth representation generation unit (for example, the third depth representation generation unit 210 illustrated in Fig. 13) described above.

The combined depth representation generation process 1500 illustrated in Fig. 15 is different from the combined depth representation generation process 400 illustrated in Fig. 4 described above in that the point cloud 1310 output from the LIDAR unit is used instead of the first depth representation. Except for this, the combined depth representation generation process 1500 illustrated in Fig. 15 is substantially the same as the combined depth representation generation process 400 illustrated in Fig. 4 described above, and thus herein, the description of the common steps is omitted.

In Step S1504, the third depth representation generation unit calculates the depth difference value indicating the difference between the depths of the point cloud 1310 of the LIDAR unit and the second depth representation 207 by comparing the point cloud 1310 output from the LIDAR unit with the second depth representation 207 (depth representation generated by performing a predetermined machine learning method on the first image).

More specifically, in Step S1504, the third depth representation generation unit calculates the depth difference value indicating the difference between the depths of the point cloud 1310 of the LIDAR unit and the second depth representation 207 by grouping corresponding objects between respective point clouds based on the positions of the bounding boxes defined by the predetermined object detection algorithm (406) and comparing results of grouping in the respective point clouds. In addition, details of this process have been described with reference to Figs. 4 to 6 and thus are omitted herein.

Next, in Step S1505, the third depth representation generation unit calculates the depth difference value of the difference between the depths of the point cloud 1310 of the LIDAR unit and the third depth representation 209 by comparing the point cloud 1310 output from the LIDAR unit with the third depth representation 209 (depth representation generated by performing a predetermined machine learning method on the second image).

More specifically, in Step S1505, the third depth representation generation unit calculates the depth difference value that indicates the difference between the depths of the first depth representation 208 and the third depth representation 209 by grouping corresponding objects between respective point clouds based on the positions of the bounding boxes defined by the predetermined object detection algorithm (406) and then comparing results of grouping in the respective point clouds. In addition, details of this process have been described with reference to Figs. 4 to 6 and thus are omitted herein.

By using the point cloud 1310 output from the LIDAR unit 814 instead of the first depth representation, the depth representation in which the accuracy of the depth information with respect to a long-distance object is limited and which is generated based on parallax between stereo images becomes unnecessary, and an obstacle can be sensed with higher accuracy, for example, than Example 1 described above.

The embodiments of the present invention have been described above, but the present invention is not limited to the above-described embodiments, and various modifications are possible without departing from the gist of the present invention.

Reference Signs List

200:    obstacle detection device
201:    first sensor
202:    second sensor
203:    first image
204:    second image
205:    first depth representation generation unit
206:    second depth representation generation unit

207:    second depth representation
208:    first depth representation
209:    third depth representation
210:    third depth representation generation unit
212:    combined depth representation
214:    obstacle detection unit
216:    obstacle information

**Claims**

1.  An obstacle detection device for detecting an obstacle near a moving body, the device comprising:

    a first depth representation generation unit that generates a first depth representation representing a distance between the moving body and an object that is present near the moving body by using a parallax image generated from a first image acquired by a first sensor and a second image acquired by a second sensor,
    a second depth representation generation unit that generates a second depth representation representing a distance between the moving body and an object that is present near the moving body by processing the first image by a predetermined machine learning method,
    a third depth representation generation unit that generates a combined depth representation representing a distance between the moving body and the object that is present near the moving body more accurately than the first depth representation and the second depth representation by combining the first depth representation and the second depth representation, and
    an obstacle detection unit that generates obstacle information relating to the obstacle near the moving body by using the combined depth representation and outputs the obstacle information.

2.  The obstacle detection device according to claim 1,
    wherein the second depth representation generation unit calculates a depth difference value indicating a difference between depths of the first depth representation and the second depth representation by comparing the first depth representation with the second depth representation in an associated manner.

3.  The obstacle detection device according to claim 2,

    wherein the third depth representation generation unit
    corrects the distance between the moving body and the object that is present near the moving body, which is represented by the second depth representation based on the depth difference value to generate corrected second depth representation,
    extracts short-distance object depth information relating to an object that is present at less than a predetermined distance from the moving body, from the first depth representation,
    extracts long-distance object depth information relating to an object that is present at the predetermined distance or more from the moving body, from the corrected second depth representation, and
    generates the combined depth representation by combining the short-distance object depth information and the long-distance object depth information.

4.  The obstacle detection device according to claim 2, further comprising:

    a light detection and ranging (LIDAR) unit that generates a fourth depth representation representing a distance between the moving body and an object that is present near the moving body by deflecting laser light to irradiate a surrounding of the moving body and observing scattered and reflected light thereof,
    wherein the third depth representation generation unit
    corrects, based on the fourth depth representation, the distance between the moving body and the object that is present near the moving body which is represented by the first depth representation to generate a corrected first depth representation,
    corrects, based on the depth difference value, the distance between the moving body and the object that is present near the moving body which is represented by the second depth representation to generate a corrected second depth representation,
    extracts, from the corrected first depth representation, short-distance object depth information relating to an object that is present at less than a predetermined distance from the moving body,

extracts, from the corrected second depth representation, long-distance object depth information relating to an object that is present at the predetermined distance or more from the moving body, and
generates the combined depth representation by combining the short-distance object depth information with the long-distance object depth information.

5. The obstacle detection device according to claim 1,

wherein the first sensor and the second sensor are stereo cameras,
the first image and the second image are stereo images acquired by the stereo cameras, and
the first depth representation is a stereo depth map generated by the stereo images.

6. The obstacle detection device according to claim 1,

wherein the third depth representation generation unit generates the combined depth representation by combining
the first depth representation generated by using the parallax image generated from the first image and the second image,
the second depth representation generated by processing the first image by the predetermined machine learning method, and
the third depth representation generated by processing the second image by the predetermined machine learning method.

7. The obstacle detection device according to claim 1,

wherein the machine learning method is a neural network including
an input layer for receiving an input of the first image,
an intermediate layer for extracting feature data of a context for characterizing an object in the first image, and
an output layer for generating the first depth representation representing depth information per pixel of the first image by using the feature data of the context and outputting the first depth representation.

8. An obstacle detection system for detecting an obstacle near a moving body,

wherein a first sensor that captures a surrounding of the moving body to acquire a first image,
a second sensor that captures the surrounding of the moving body to acquire a second image, and
an obstacle detection device that detects the obstacle are connected via a communication network,

wherein the obstacle detection device includes
a first depth representation generation unit that generates a first depth map representing a distance between the moving body and an object that is present near the moving body by using a parallax image generated from the first image received from the first sensor and the second image received from the second sensor,
a second depth representation generation unit that generates a second depth map representing the distance between the moving body and the object that is present near the moving body by processing the first image by a predetermined machine learning method,
a third depth representation generation unit that generates a combined depth representation representing the distance between the moving body and the object that is present near the moving body more accurately than the first depth map and the second depth map by combining the first depth map and the second depth map, and
an obstacle detection unit that generates obstacle information relating to the obstacle near the moving body by using the combined depth representation and transmits the obstacle information to a predetermined notification destination.

9. An obstacle detection method for detecting an obstacle near a moving body, the method comprising:

a step of generating a point cloud as depth representation acquired by a LIDAR unit and representing a distance between the moving body and an object that is present near the moving body;
a step of generating a depth map as a depth representation representing a distance between the moving body and an object that is present near the moving body by processing a first image acquired by a first sensor by a predetermined machine learning method;

a step of generating a combined depth representation representing the distance between the moving body and the object that is present near the moving body more accurately than the point cloud and the depth map by combining the point cloud and the depth map, and

a step of generating obstacle information relating to the obstacle near the moving body by using the combined depth representation and outputting the obstacle information.

FIG. 1

COMPUTER SYSTEM
300

DISPLAY DEVICE 326 — DISPLAY SYSTEM 324

PROCESSOR 302
CPU 302A
CPU 302B

BUS IF 309

306
MEMORY BUS

MEMORY 304
OBSTACLE DETECTION APPLICATION 350

I/O BUS IF 310

308
I/O BUS

TERMINAL INTERFACE 312
STORAGE INTERFACE 314
I/O DEVICE INTERFACE 316
NETWORK INTERFACE 318

USER I/O DEVICE 320
STORAGE DEVICE 322

NETWORK 330

EP 4 213 128 A1

FIG. 2

<u>200</u>

FIG. 3

360

FIG. 4

**400**

OBSTACLE DETECTION ALGORITHM — 406

212
COMBINED DEPTH REPRESENTATION

207
SECOND DEPTH REPRESENTATION

208
FIRST DEPTH REPRESENTATION

209
THIRD DEPTH REPRESENTATION

S401
CONVERT TO POINT CLOUD

S402
CONVERT TO POINT CLOUD

S403
CONVERT TO POINT CLOUD

S411
COMBINE SHORT-DISTANCE OBJECT DEPTH INFORMATION AND LONG-DISTANCE OBJECT DEPTH INFORMATION

GROUP POINT CLOUDS OF FIRST DEPTH REPRESENTATION AND SECOND DEPTH REPRESENTATION BASED ON POSITIONS OF BOUNDING BOXES AND CALCULATE DIFFERENCE VALUE

GROUP POINT CLOUDS OF FIRST DEPTH REPRESENTATION AND THIRD DEPTH REPRESENTATION BASED ON POSITIONS OF BOUNDING BOXES AND CALCULATE DIFFERENCE VALUE

S410
EXTRACT SHORT-DISTANCE OBJECT DEPTH INFORMATION FROM FIRST DEPTH REPRESENTATION

S404

S405

AVERAGE DIFFERENCE VALUE AND CALCULATE CORRECTION VALUE

S407

EXTRACT LONG-DISTANCE OBJECT DEPTH INFORMATION FROM CORRECTED FIRST DEPTH REPRESENTATION AND SECOND DEPTH REPRESENTATION

CORRECT SECOND DEPTH REPRESENTATION AND THIRD DEPTH REPRESENTATION BASED ON CORRECTION VALUE

S408

S409

207R
CORRECTED SECOND DEPTH REPRESENTATION

CORRECTED THIRD DEPTH REPRESENTATION

209R

EP 4 213 128 A1

23

FIG. 5

501

525
205
508
524
512
201

502

508
534
202
201

503
535
205
508
544
528
202

FIG. 6

207

208

209

212

EP 4 213 128 A1

FIG. 7

508

508

201

202

EP 4 213 128 A1

FIG. 8

800

OBSTACLE INFORMATION — 216

OBSTACLE DETECTION UNIT — 214

COMBINED DEPTH REPRESENTATION — 212

210 — THIRD DEPTH REPRESENTATION GENERATION UNIT

207 — SECOND DEPTH REPRESENTATION

208 — FIRST DEPTH REPRESENTATION

209 — THIRD DEPTH REPRESENTATION

205,206 — FIRST AND SECOND DEPTH REPRESENTATION GENERATION UNITS

203 — FIRST IMAGE

816 — POINT CLOUD

SECOND IMAGE — 204

201 — 202

814

EP 4 213 128 A1

# FIG. 9

EP 4 213 128 A1

FIG. 10

208

EP 4 213 128 A1

FIG. 11

**1100**

SENSE PREDETERMINED OBJECT ⌒ 406

207 — SECOND DEPTH REPRESENTATION

208 — FIRST DEPTH REPRESENTATION

209 — THIRD DEPTH REPRESENTATION

212 — COMBINED DEPTH REPRESENTATION

GROUP FIRST DEPTH REPRESENTATION AND SECOND DEPTH REPRESENTATION BASED ON POSITIONS OF BOUNDING BOXES AND CALCULATE DIFFERENCE VALUE

S1104

GROUP FIRST DEPTH REPRESENTATION AND THIRD DEPTH REPRESENTATION BASED ON POSITIONS OF BOUNDING BOXES AND CALCULATE DIFFERENCE VALUE

S1105

S411 — COMBINE SHORT-DISTANCE OBJECT DEPTH INFORMATION AND LONG-DISTANCE OBJECT DEPTH INFORMATION

S410 — EXTRACT SHORT-DISTANCE OBJECT DEPTH INFORMATION FROM FIRST DEPTH REPRESENTATION

AVERAGE DIFFERENCE VALUES

S407

CORRECT FIRST ML DEPTH MAP AND SECOND ML DEPTH MAP BASED ON DIFFERENCE VALUE

S408

EXTRACT LONG-DISTANCE OBJECT DEPTH INFORMATION FROM CORRECTED FIRST DEPTH REPRESENTATION AND SECOND DEPTH REPRESENTATION

S409

207R — CORRECTED SECOND DEPTH REPRESENTATION

CORRECTED THIRD DEPTH REPRESENTATION — 209R

30

# FIG. 12

COMBINED DEPTH REPRESENTATION — 212

**1200**

207 — SECOND DEPTH REPRESENTATION
208 — FIRST DEPTH REPRESENTATION
209 — THIRD DEPTH REPRESENTATION

S401 — CONVERT TO POINT CLOUD
S402 — CONVERT TO POINT CLOUD
S403 — CONVERT TO POINT CLOUD

S1204 — GROUP POINT CLOUDS OF FIRST DEPTH REPRESENTATION AND SECOND DEPTH REPRESENTATION BY NEAREST NEIGHBOR SEARCH METHOD AND CALCULATE DIFFERENCE VALUE

S1205 — GROUP POINT CLOUDS OF FIRST DEPTH REPRESENTATION AND THIRD DEPTH REPRESENTATION BY NEAREST NEIGHBOR SEARCH METHOD AND CALCULATE DIFFERENCE VALUE

AVERAGE DIFFERENCE VALUES — S407

CORRECT FIRST ML DEPTH MAP AND SECOND ML DEPTH MAP BASED ON DIFFERENCE VALUE — S408

207R — CORRECTED SECOND DEPTH REPRESENTATION

CORRECTED THIRD DEPTH REPRESENTATION — 209R

S411 — COMBINE SHORT-DISTANCE OBJECT DEPTH INFORMATION AND LONG-DISTANCE OBJECT DEPTH INFORMATION

S410 — EXTRACT SHORT-DISTANCE OBJECT DEPTH INFORMATION FROM FIRST DEPTH REPRESENTATION

EXTRACT LONG-DISTANCE OBJECT DEPTH INFORMATION FROM CORRECTED FIRST AND SECOND ML DEPTH MAPS — S409

EP 4 213 128 A1

31

FIG. 13

<u>1300</u>

**FIG. 14**

1460

# FIG. 15

## 1500

SENSE PREDETERMINED OBJECT ⟿ 406

207 → SECOND DEPTH REPRESENTATION

1310 → POINT CLOUD

209 → THIRD DEPTH REPRESENTATION

212 → COMBINED DEPTH REPRESENTATION

S401 → POINT CLOUD

S403 → POINT CLOUD

S1504 → GROUP POINT CLOUD OF SECOND DEPTH REPRESENTATION AND POINT CLOUD OF LIDAR BASED ON POSITIONS OF BOUNDING BOXES AND CALCULATE DIFFERENCE VALUE

S1505 → GROUP POINT CLOUD OF THIRD DEPTH REPRESENTATION AND POINT CLOUD OF LIDAR BASED ON POSITIONS OF BOUNDING BOXES AND CALCULATE DIFFERENCE VALUE

S411 → COMBINE SHORT-DISTANCE OBJECT DEPTH INFORMATION AND LONG-DISTANCE OBJECT DEPTH INFORMATION

S410 → EXTRACT SHORT-DISTANCE OBJECT DEPTH INFORMATION FROM POINT CLOUD

AVERAGE DIFFERENCE VALUES

S409 → EXTRACT LONG-DISTANCE OBJECT DEPTH INFORMATION FROM CORRECTED FIRST DEPTH REPRESENTATION AND SECOND DEPTH REPRESENTATION

S407 → CORRECT FIRST ML DEPTH MAP AND SECOND ML DEPTH MAP BASED ON DIFFERENCE VALUE

S408

207R → CORRECTED SECOND DEPTH REPRESENTATION

209R → CORRECTED THIRD DEPTH REPRESENTATION

**INTERNATIONAL SEARCH REPORT**

| International application No. |
| --- |
| PCT/JP2021/027275 |

A. CLASSIFICATION OF SUBJECT MATTER
G08G 1/16(2006.01)i; G06T 7/00(2017.01)i
FI: G08G1/16 C; G06T7/00 350C; G06T7/00 650Z
According to International Patent Classification (IPC) or to both national classification and IPC

B. FIELDS SEARCHED

Minimum documentation searched (classification system followed by classification symbols)
G08G1/00-99/00; B60W30/00-60/00; B60R21/00-21/017; G06N3/00-3/12; G06N20/00-20/20; G01S7/48-7/51; G01S17/00-17/95; G06T7/00-7/90; H04N7/18

Documentation searched other than minimum documentation to the extent that such documents are included in the fields searched
Published examined utility model applications of Japan        1922–1996
Published unexamined utility model applications of Japan      1971–2021
Registered utility model specifications of Japan              1996–2021
Published registered utility model applications of Japan      1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2020-020612 A (RICOH CO., LTD.) 06 February 2020 (2020-02-06) paragraphs [0004], [0015], [0021]-[0022], [0026], [0053] | 1-9 |
| Y | JP 2019-125112 A (CANON INC.) 25 July 2019 (2019-07-25) paragraphs [0003], [0008], [0013]-[0015], [0039] | 1-9 |
| Y | JP 2004-028727 A (FUJI HEAVY INDUSTRIES LTD.) 29 January 2004 (2004-01-29) paragraph [0007], fig. 1 | 4 |
| X | JP 2020-126607 A (STRADVISION, INC.) 20 August 2020 (2020-08-20) paragraphs [0001], [0009], [0037], [0049]-[0050], fig. 3 | 9 |
| A | | 1-8 |
| A | JP 2019-526878 A (NIANTIC, INC.) 19 September 2019 (2019-09-19) paragraphs [0009]-[0013], [0023] | 1-9 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 September 2021 (14.09.2021) | 21 September 2021 (21.09.2021) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application no.

PCT/JP2021/027275

| Patent Documents referred in the Report | Publication Date | Patent Family | Publication Date |
|---|---|---|---|
| JP 2020-020612 A | 06 Feb. 2020 | (Family: none) | |
| JP 2019-125112 A | 25 Jul. 2019 | WO 2019/138677 A1 | |
| JP 2004-028727 A | 29 Jan. 2004 | (Family: none) | |
| JP 2020-126607 A | 20 Aug. 2020 | EP 3690482 A1 paragraphs [0001], [0008], [0036], [0048]-[0049], fig. 3 US 10408939 B1 KR 10-2020-0095333 A CN 111507927 A | |
| JP 2019-526878 A | 19 Sep. 2019 | US 2019/0213481 A1 paragraphs [0009]-[0013], [0031] WO 2018/046964 A1 EP 3510561 A1 CN 109791697 A KR 10-2019-0065287 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017528731 A

- US 9443154 B